# EUROPÄISCHE PATENTSCHRIFT

(11) **EP 2 622 308 B1**
(45) Veröffentlichungstag und Bekanntmachung des Hinweises auf die Patenterteilung: **16.12.2015**
(21) Anmeldenummer: 11764681.0
(22) Anmeldetag: 28.09.2011
(51) Int. Cl.: G01C 21/34

(54) **VERFAHREN ZUM GEWINNEN EINES GESCHWINDIGKEITSPROFILS**
METHOD FOR OBTAINING A SPEED PROFILE
PROCÉDÉ DE PRODUCTION D'UN PROFIL DE VITESSE

(30) Priorität: 01.10.2010 DE 102010047080
(43) Veröffentlichungstag der Anmeldung: 07.08.2013
(73) Patentinhaber: Audi AG, 85045 Ingolstadt (DE)
(72) Erfinder: PAPAJEWSKI, Jens, 86697 Unterhausen (DE); WILHELM, Christian, 85092 Kösching (DE); TÖPLER, Felix, 52070 Aachen (DE); HUANG, Qi Hui, 52072 Aachen (DE)
(74) Vertreter: Brandt, Kai
(86) Internationale Anmeldenummer: PCT/EP2011/004843
(87) Internationale Veröffentlichungsnummer: WO 2012/041490

(56) Entgegenhaltungen:
- EP-A1- 2 221 581
- EP-A1- 2 224 212
- WO-A1-2010/081836
- DE-A1-102007 059 120
- DE-A1-102008 035 944

## Beschreibung

Die Erfindung betrifft ein Verfahren zum Gewinnen eines Datensatzes, der die vorhergesagte Geschwindigkeit eines Fahrzeugs über eine Vielzahl von Streckenpunkten einer Route wiedergibt oder alternativ die Geschwindigkeit Zeitpunkten zuordnet, die bezüglich einer Fahrt auf der Route definiert sind. Der Datensatz ergibt in seiner Gesamtheit bei beiden Alternativen ein Geschwindigkeitsprofil.

Ein Verfahren dieser Art ist als solches bekannt, vergleiche insbesondere auch die DE 2007 059 120 A1, in der bereits eine verfeinerte Form des Verfahrens beschrieben ist.

Herkömmlicherweise ist es Aufgabe eines Navigationssystems, eine nach einem bestimmten Kriterium optimale Route auszusuchen. Eines der Kriterien beinhaltet, dass die Route möglichst schnell durchfahren wird. Dann muss zu der Route auch ermittelt werden, wie schnell sie insgesamt befahren werden kann. Dies geht aber wiederum nur, wenn ein Geschwindigkeitsprofil bekannt ist; zum Gewinnen eines solchen Geschwindigkeitsprofils verwendet man bisher Angaben über die Eigenschaften der Straße. Beispielsweise wird einer innerörtlichen Straße eine Geschwindigkeit von 50 km/h, also die maximal erlaubte Geschwindigkeit, zugeordnet, einer Landstraße eine Geschwindigkeit von 100 km/h zugeordnet, also wiederum die maximal erlaubte Geschwindigkeit, und der Autobahn wird eine Durchschnittsgeschwindigkeit von 110 km/h zugeordnet. Zumeist wird idealisierend davon ausgegangen, dass der Wechsel zwischen den Geschwindigkeiten quasi abrupt erfolgt. Man ordnet hierbei in einer graphischen Darstellung der Route in der Art einer Baum-Darstellung einzelnen Knotenpunkten und Ästen bestimmte Geschwindigkeiten zu.

Die DE 10 2007 059 120 A1 geht zum Zwecke einer möglichst genauen Berechnung des Energieverbrauchs darüber hinaus und berücksichtigt zusätzlich, dass zwischen einzelnen Phasen, in denen mit konstanter Geschwindigkeit gefahren wird, eine Phase der Beschleunigung liegen muss bzw. umgekehrt eine Verzögerung liegen muss. Dabei wird von einem bestimmten numerischen Wert für die Beschleunigung ausgegangen. Allerdings kann bei der Bestimmung dieses Wertes berücksichtigt werden, welchen Fahrstil der Fahrzeugführer hat ("sportlich" oder "konservativ"), und auch eine Steigung der Straße wird berücksichtigt.

Auch bei der DE 10 2007 059 120 A1 sind bestimmte Annahmen gemacht, nämlich insbesondere die eines idealisierten Verkehrsgeschehens. Für den Fall einer Verkehrsstörung wird zwar ein Störterm verwendet, mit Hilfe dieses Störterms wird aber nur in eingeschränkter Weise die Realität abgebildet.

Die DE 10 2008 035 944 A1 offenbart ein Verfahren zum Optimieren des Fahrbetriebs eines Kraftfahrzeugs unter ökologischen und ökonomischen Gesichtspunkten. Basierend auf Informationen über das Kraftfahrzeug und Eigenschaften der zu befahrenden Strecke sowie gesetzlich vorgeschriebenen Geschwindigkeitsbegrenzungen wird ein maximal mögliches Geschwindigkeitsprofil berechnet. Des Weiteren wird ein unteres akzeptables Geschwindigkeitsprofil für die Strecke berechnet. In Abhängigkeit von einer von einem Fahrer vorgebbaren Zielankunftszeit und dem Energieeinsparpotential entlang von einzelnen Streckenabschnitten der Strecke wird das tatsächliche Geschwindigkeitsprofil berechnet, welches Werte zwischen den zuvor genannten Geschwindigkeiten aufweist.

Die WO 2010/081836 A1 offenbart ein Verfahren zum Ermitteln eines optimalen Geschwindigkeitsprofils entlang einer Strecke, so dass ein Kraftfahrzeug besonders energieeffizient betrieben werden kann. Es wird ein erstes Geschwindigkeitsprofil ermittelt, welches einen Mittelwert einer Vielzahl von gemessenen Geschwindigkeitsprofilen entlang der Strecke bei freiem Verkehrsfluss repräsentiert. Unter Beachtung von Geschwindigkeitsbegrenzungen entlang der Strecke und Energieverbrauchsgesichtspunkten wird ein optimales Geschwindigkeitsprofil ermittelt, bei welchem die Anzahl an Beschleunigungs- und Bremsaktionen entlang der Strecke minimiert ist.

Die EP 2 221 581 A1 zeigt ebenfalls ein Verfahren zum Ermitteln eines Geschwindigkeitsprofils entlang einer Strecke, so dass ein Kraftfahrzeug besonders energieeffizient betrieben werden kann. Unter Berücksichtigung von Daten bezüglich der Streckenführung, der Art der befahrenen Straße, Geschwindigkeitsbegrenzungen, der Verkehrssituation sowie einem Fahrstil eines Fahrers werden für einzelne Streckensegmente der gesamten Strecke Geschwindigkeitsprofile erstellt. Die Geschwindigkeitsprofile werden wiederum in einzelne Fahrmanöver, wie beispielsweise Fahrten mit konstanter Geschwindigkeit, Bremsmanöver und dergleichen, unterteilt.

Die EP 2 224 212 A1 zeigt ein Verfahren zur Ermittlung der voraussichtlichen Navigationszeit. Zur Aufnahme von Nutzergeschwindigkeiten in einer Geschwindigkeitstabelle werden bei der Bewegung eines Fahrzeugs auf einer Fahrstrecke nach vorgebbaren Intervallen Messungen der aktuellen Geschwindigkeit durchgeführt. Hierzu werden jeweils die in einer Straßenkarte vorhandenen Straßenelemente verarbeitet, indem mittels einer Positionsermittlungseinheit ein jeweils aktuelles Straßenelement aus einer Kartendatenbank ausgelesen und unter Berücksichtigung von bestimmten Attributen die passende Straßenelementklasse ermittelt wird. Um unterschiedliches Fahrverhalten in unterschiedlichen Ländern zu berücksichtigen, wird eine Unterscheidung in einzelne Länder vorgenommen, wobei die ermittelten Nutzergeschwindigkeiten länderspezifisch in gesonderten Tabellen abgespeichert.

Es ist Aufgabe der vorliegenden Erfindung, ein Verfahren der eingangs beschriebenen Gattung bereitzustellen, das für ein möglichst realitätsnahes Geschwindigkeitsprofil sorgt und daher zu einer vorbestimmten Route eine möglichst präzise Vorhersage betreffend einer Ankunftszeit machen kann.

Die Aufgabe wird durch ein Verfahren mit den Merkmalen des Patentanspruchs 1 gelöst.

Erfindungsgemäß wird somit zunächst ein erster Datensatz bereitgestellt, der einer Vielzahl von Strecken oder (Teil-)Routen (möglichst auf einem vollständigen Straßennetz) Streckenpunkte zuordnet. Ferner wird ein zweiter Datensatz bereitgestellt, durch den eine Mehrzahl an Vorgängen definiert ist, wobei als definierende Größen zumindest eine Eingangsgeschwindigkeit und eine Ausgangsgeschwindigkeit vorgesehen sind. Das erfindungsgemäße Verfahren umfasst, dass eine Mehrzahl von Routen befahren wird und hierbei Messwerte zur Fahrzeuggeschwindigkeit an bestimmten Streckenpunkten gewonnen werden. Die sich in den Messwerten indirekt widerspiegelnde Erfahrung wird dann in direkter Weise dadurch sichtbar gemacht, dass eine Mehrzahl (aber bevorzugt eine endliche Zahl) von Vorgängen definiert wird, denen eine Eingangsgeschwindigkeit, und eine Ausgangsgeschwindigkeit zugeordnet ist, und zwar erfolgt das Definieren aufgrund der gewonnenen Messwerte. Durch die vorliegende Erfindung lässt sich auch die an sich aus der DE 2007 059 120 A1 bekannte Maßnahme, nach einer Mehrzahl von Fahrstilen zu unterscheiden, erst besonders wirksam nutzen. Es lässt sich in dem zweiten Datensatz eine Mehrzahl von Fahrstilen zuordnen (wenn ausreichendes Datenmaterial zur Verfügung steht). Es lassen sich dann bestimmte Vorgänge passend zu einem bestimmten Fahrstil definieren, z. B. nach Art des "Kavalierstarts" o. ä. zu einem sportlichen Fahrstil etc. Es lassen sich im Rahmen der Bereitstellung des zweiten Datensatzes solche Vorgänge definieren, die jeweils gemäß ihrer Definition oder wenigstens in ähnlicher Form tatsächlich auftreten. Beispielsweise muss ein Vorgang einer Beschleunigung von der Geschwindigkeit 0 auf die Geschwindigkeit 180 nicht definiert werden, weil dieser Vorgang selten ist. Stattdessen kann ein Vorgang definiert werden, der von einer Fahrzeuggeschwindigkeit von 0 km/h auf 53 km/h beschleunigt wird, für das Beschleunigen an einer Ampel innerorts nach deren Schalten auf "Grün". Dann kann sich ein Vorgang des Beschleunigens von 53 km/h auf 85 km/h anschließen, wenn der Fahrzeugführer den Ort verlässt und eine Geschwindigkeitsbeschränkung von 80 km/h vorliegt. Dann kann für den Fall, dass der Fahrzeugführer auf einer Autobahn fährt, eine Beschleunigung von 85 km/h bis auf 130 km/h, eine durchschnittliche Geschwindigkeit definiert werden, und schließlich können Stufen von mindestens 10 km/h ausgehend von 130 km/h definiert sein. Der tatsächliche Vorgang der Beschleunigung von 0 km/h auf 180 km/h lässt sich dann aus einer Mehrzahl von Teilvorgängen zusammensetzen.

Dies wird nachfolgend im Rahmen des erfindungsgemäßen Verfahrens auch getan: Es erfolgt die Auswahl einer vorbestimmten Route und zu der Route wird, vielleicht in der bisher bekannten Art, ein vorläufiges Geschwindigkeitsprofil der Fahrt eines bestimmten Fahrzeugs über die vorbestimmte Route ermittelt. Es erfolgt das Aufteilen der Route, insbesondere das vollständige Aufteilen der Route, in Streckenabschnitte, und zwar dergestalt, dass jedem Streckenabschnitt ein Vorgang aus den in dem zweiten Datensatz definierten Vorgängen zugeordnet wird. Das Aufteilen der Route erfolgt anhand des vorläufigen Geschwindigkeitsprofils. Auf diese Weise kann dann ein endgültiges Geschwindigkeitsprofil gewonnen werden. Bei dem erfindungsgemäßen Verfahren wird zu jedem Vorgang hierfür ein Geschwindigkeitsprofil festgelegt. Es wird hier insbesondere zumindest teilweise berücksichtigt, was außerhalb des einen Vorgangs geschieht. So können zum einen mehrere Vorgänge zu einer Vorgangsgruppe, gewissermaßen einem neuen Vorgang, zusammengefasst werden und der ganzen Vorgangsgruppe ein Geschwindigkeitsprofil zugeordnet werden. Wichtig ist aber insbesondere, dass in zumindest einem Fall das festgelegte Geschwindigkeitsprofil ein Aussehen hat, welches maßgeblich von dem benachbarten Vorgang (bzw. der benachbarten Vorgangsgruppe) abhängt. Beispielsweise kann man der selben Konstantgeschwindigkeit aus dem vorläufigen Geschwindigkeitsprofil Unterschiedliches zuordnen, je nachdem, wie sich die Fahrt fortsetzt. Bei Fahrt mit 40 km/h innerorts wird regelmäßig an Ampeln angehalten, also vollständig auf 0 km/h heruntergebremst. Bei Fahrt mit 40 km/h aus einem Ort heraus kann eine nachfolgende Beschleunigung erfolgen, so dass der Fahrer bereits zuvor immer schon ein wenig vorab beschleunigt und wieder leicht abbremst.

Die vorliegende Erfindung macht Gebrauch von dem Konzept eines "Vorgangs", dem eine Eingangsgeschwindigkeit und eine Ausgangsgeschwindigkeit zugeordnet sind. Es wird durch die vorliegende Erfindung das Konzept eingeführt, situative Kontexte zu definieren. Die Verwendung des Konzepts eines "Vorgangs" geht auch darüber hinaus, einfach bestimmten Strecken eine Durchschnittszeit zuzuordnen und diese einem bestimmten Zweig in einem graphischen Baum, der das Straßenverkehrsnetz symbolisch wiedergibt, zuzuordnen. Die Gesamtheit der Vorgänge kann und soll insbesondere die Eigenschaft haben, dass sich die Fahrt längs einer Route tatsächlich in eine Vielzahl von Vorgängen aufteilen lässt, ohne dass undefinierte Situationen verbleiben.

Erfindungsgemäß wird zudem vor Schritt e) des erfindungsgemäßen Verfahrens entweder (gemeinsam mit der Auswahl der vorbestimmten Route) durch eine Bedieneingabe ein Fahrstil ausgewählt, oder es ist aufgrund einer Probefahrt ein Fahrstil zugeordnet. Durch das Festlegen des Fahrstils (Auswählen bzw. Zuordnen) wird dann klar, welche Mehrzahl von Vorgängen relevant ist. In Schritt e) wird somit der ausgewählte bzw. zugeordnete Fahrstil berücksichtigt, nämlich zu jedem Streckenabschnitt nur ein Vorgang aus dem im zweiten Datensatz zu genau diesem Fahrstil definierten Vorgängen zugeordnet.

Das Konzept des Vorgangs kann über das Konzept einer einfachen Beschleunigung über eine bestimmte Strecke, gegebenenfalls mit einer bestimmten Steigung, (oder einer einfachen Konstantfahrt oder einer einfachen Verzögerung) hinaus auch komplexere Kontexte widerspiegeln. Somit wird bevorzugt das Definieren der Vorgänge so gestaltet, dass zu zumindest einem Teil der Vorgänge ein Verlauf der Geschwindigkeit zwischen der Eingangsgeschwindigkeit und der Ausgangsgeschwindigkeit festgelegt wird, der einen nicht-linearen Abschnitt umfasst. Es werden gewissermaßen Zwischenwerte für die Geschwindigkeit angegeben, und diese gehen nicht einfach aus einem linearen Zusammenhang hervor. Beispielsweise kann ein Vorgang einem Fahrmanöver zugeordnet sein, bei dem der Fahrzeugführer eine Kurve durchfährt: Er bremst das Fahrzeug zunächst ein wenig ab, beschleunigt dann aber aus der Kurve heraus wieder bis zur nächsten Geradeausfahrt. Durch die Maßnahme des Vorsehens von Zwischenwerten für die Geschwindigkeit lässt sich insbesondere auch außerhalb der Fahrbahn liegenden Gegebenheiten Rechnung tragen. So kann ein Vorgang auch in gewisser Hinsicht einer statistisch schwankenden Größe Rechnung tragen: Vor einer Ampel kann es sein, dass das Fahrzeug vollständig zum Stillstand kommen muss, es kann aber auch sein, dass das Fahrzeug sogar leicht beschleunigt, um über die Ampel fahren zu können. Was sich im Mittel daraus ergibt, lässt sich durch einen bestimmten Vorgang wiedergeben, bei dem z. B. auf eine Geschwindigkeit von > 0 km/h herabgebremst wird, wobei anschließend wieder beschleunigt wird. Eine neuartige Idee liegt auch einer Modellierung einer typischen Fahrt zugrunde, bei der eine konstante Geschwindigkeit gewünscht ist: In der Realität schwankt die tatsächliche Geschwindigkeit etwas um die gewünschte Geschwindigkeit; diese lässt sich in einem Modell durch eine oszillatorische Änderung der Geschwindigkeit wiedergeben. Somit wird bevorzugt in dem nicht-linearen Abschnitt ein linearer Verlauf der Geschwindigkeit durch einen oszillatorischen Verlauf der Geschwindigkeit überlagert. Genauso kann auch ein Geschwindigkeitsprofil festgelegt werden, bei dem ein Abschnitt mit linear verlaufender Geschwindigkeit von einem Abschnitt unterbrochen wird, bei dem die Geschwindigkeit spontan, insbesondere soweit als im Rahmen der Fahrzeugführung möglich instantan, erhöht oder erniedrigt wird. Vorzugsweise wird nach der Unterbrechung zum unterbrochenen linearen Verlauf zurückgekehrt, entweder bei einem Geschwindigkeitswert, bei dem die Unterbrechung erfolgte, oder bei einer sich bei Fortsetzung des linearen Verlaufs über die Zeit an sich, ohne die Unterbrechung, ergeben habenden Geschwindigkeit.

Bevorzugt wird zudem auch bereits beim Ermitteln des vorläufigen Geschwindigkeitsprofils der ausgewählte bzw. zugeordnete Fahrstil berücksichtigt. (Beispielsweise kann bei einem bestimmten Fahrstil von einer Überschreitung der maximal zulässigen Geschwindigkeit um einen bestimmten Betrag ausgegangen werden etc., wohingegen bei einem anderen Fahrstil davon ausgegangen wird, dass versucht wird, exakt die maximal zulässige Geschwindigkeit einzuhalten.)

Bei einem bevorzugen Aspekt der Erfindung ist in an sich bekannter Weise bei dem in Schritt a) bereitgestellten Datensatz auch eine Information über die Art von Straßen beinhaltet, und diese Information wird bevorzugt auch in Schritt f) berücksichtigt. Es wird hierbei lediglich an das Bekannte angeknüpft. Gleiches gilt für das Berücksichtigen einer Eingangshöhe und einer Ausgangshöhe, evt. auch einer Steigung.

Zur späteren Ermittlung des Energieverbrauchs beim Befahren der vorbestimmten Route kann es hilfreich sein, anhand des endgültigen Geschwindigkeitsprofils die an den Rädern eines die Route befahrenden Kraftfahrzeugs aufzubringende Leistung zu ermitteln, und zwar zugeordnet zu den Streckenpunkten oder Zeitpunkten, zu denen auch die Daten des Datensatzes zum Geschwindigkeitsprofil gegeben sind.

Anhand des endgültigen Geschwindigkeitsprofils kann zudem eine Zahl zur Angabe der Güte der Vorhersage ermittelt werden.

Das erfindungsgemäße Verfahren wird bevorzugt im Rahmen der Bedienung einer Navigationsvorrichtung in einem Kraftfahrzeug durchgeführt. Die Verwendung alternativer Datenverarbeitungseinrichtungen ist denkbar. Grundsätzlich gilt, dass der erste und zweite Datensatz in einem Speicher eines Kraftfahrzeugs abgelegt werden, dass Schritt c) anhand einer Bedienvorrichtung in dem Kraftfahrzeug erfolgt und die Schritte d) bis f) durch eine Datenverarbeitung des Kraftfahrzeugs durchgeführt werden.

Die Erfindung betrifft auch ein Kraftfahrzeug mit einem Speicher, einer Bedienvorrichtung und einer Datenverarbeitungseinrichtung, in dem die Schritte c) bis f) durchführbar sind, wobei insbesondere in dem Kraftfahrzeug eine Route also auswählbar ist, anhand der ein Geschwindigkeitsprofil definiert wird, das in Streckenabschnitte eingeteilt ist, denen jeweils Vorgänge zugeordnet sind, wobei bei zumindest einem Teil der Vorgänge ein Verlauf der Geschwindigkeit zwischen der Eingangsgeschwindigkeit und der Ausgangsgeschwindigkeit vorgesehen ist, der einen nicht-linearen Abschnitt umfasst.

Nachfolgend wird eine bevorzugte Ausführungsform der Erfindung unter Bezugnahme auf die Zeichnung näher beschrieben, in der
- Fig. 1: ein Flussschaubild zur Erläuterung eines Aspektes des erfindungsgemäßen Verfahrens ist, der der Schaffung der Grundlagen gilt,
- Fig. 2: zur Erläuterung eines Schritts aus dem Flussschaubild gemäß Fig. 1 dient,
- Fig. 3: schematisch eine Matrix veranschaulicht, wie sie Ergebnis des anhand von Fig. 1 erläuterten Verfahrens ist,
- Fig. 4: ein Fig. 1 entsprechendes Flussschaubild zu dem erfindungsgemäßen Verfahren veranschaulicht, wie es in einem bestimmten Fahrzeug unter Nutzung der Matrix aus Fig. 3 durchgeführt wird,
- Fig. 5: drei Graphen zeigt, anhand derer die Modellierung einer Fahrt mit konstanter Geschwindigkeit veranschaulicht wird,
- Fig. 6: zwei Kurven zeigt, die einerseits ein vorläufiges Geschwindigkeitsprofil betreffen, wie es herkömmliche Navigationssysteme anwenden, und andererseits ein Geschwindigkeitsprofil zeigt, wie es das erfindungsgemäße Verfahren vorhersagt,
- Fig. 7 und Fig. 8: jeweils ein Höhenprofil, ein hierzu zugeordnetes Geschwindigkeitsprofil und die hierbei an den Rädern aufzubringende Leistung veranschaulichen, wobei Fig. 7 diese Größen in Abhängigkeit von der gefahrenen Strecke veranschaulicht, Fig. 8 in Abhängigkeit von der verstreichenden Zeit veranschaulicht.

Bei einem Vorverfahren ist in Schritt S10 davon ausgegangen, dass ein Datensatz zur Verfügung steht, in dem eine Mehrzahl von Strecken abgelegt sind, zu denen jeweils zumindest an bestimmten Streckenpunkten eine Information über die Höhe (über Normalnull) zur Verfügung steht, wobei ferner eine Information über die typischerweise fahrbare Geschwindigkeit zur Verfügung steht, z. B. die maximal erlaubte Geschwindigkeit, und wobei ferner Streckenattribute abgespeichert sind, z. B. ob es sich um eine Landstraße oder eine Autobahn handelt.

Nun wird eine bestimmte Route ausgewählt. In Schritt S12 wird zu dieser Route ein vorläufiges Geschwindigkeitsprofil angegeben. In an sich bekannter Weise wird bestimmten Streckenabschnitten eine bestimmte Fahrgeschwindigkeit zugeordnet, wobei zwischen den Geschwindigkeiten abrupt gesprungen wird. In Schritt S14 erfolgt eine Verfeinerung dieses Geschwindigkeitsprofils, dergemäß auch eine Beschleunigung auf die Geschwindigkeiten hin berücksichtigt wird, genauso auch die Verzögerung zu niedrigeren Geschwindigkeiten hin. Nun wird die Strecke tatsächlich von einem Fahrer mit einem bestimmten Fahrstil und mit einem bestimmten Fahrzeug befahren. Hierbei wird das tatsächliche Geschwindigkeitsprofil gemessen, das an die Stelle des vorhergesagten tritt.

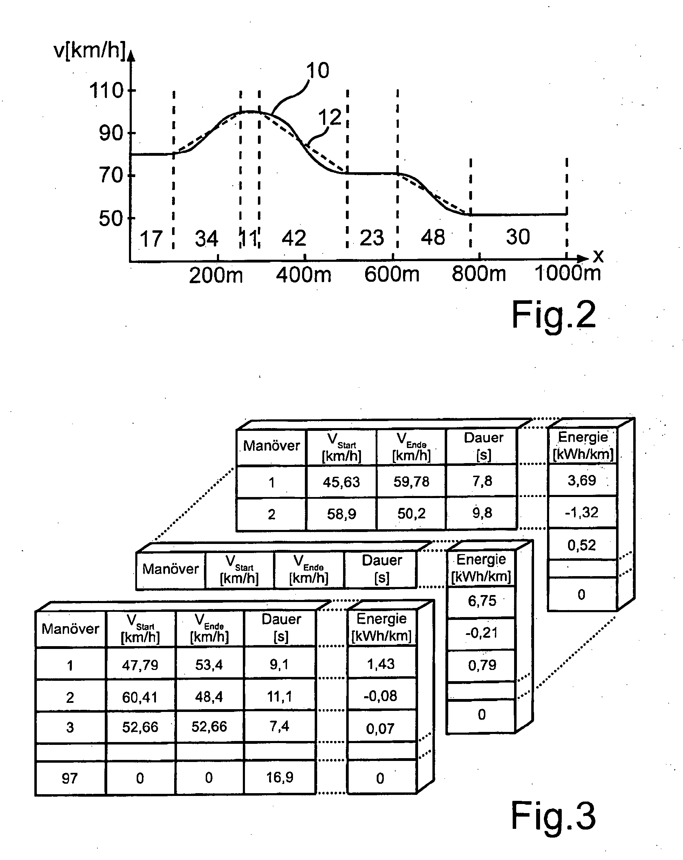

Aus dem so erhaltenen gemessenen vorläufigen Profil 10 (Fig. 2) lässt sich nun in Schritt S16 das mit der gestrichelten Linie 12 gezeigte modellierte Geschwindigkeitsprofil ableiten. Hierbei ist davon ausgegangen, dass ein bestimmter Streckenabschnitt (Strecke Fig. 2 längs der x-Achse aufgetragen) sich in bestimmte Teileinheiten einteilen lässt. Man definiert bestimmte Vorgänge (die sich auch als "Manöver" bezeichnen lassen), die wiederkehrend sind. Beispielsweise ordnet man gemäß Fig. 2 der ersten Teilstrecke das Manöver "17" zu, bei dem mit 80 km/h konstant gefahren wird. Nun ordnet man das Manöver "34" zu, demgemäß von 80 km/h auf 100 km/h beschleunigt wird. Beim Manöver "11" wird dann konstant mit 100 km/h gefahren, und bei Manöver "42" wird dann von 100 km/h auf 70 km/h verzögert.

Bei einem ersten Durchlauf des Schrittes S16 und der Zuweisung von Vorgängen bzw. Manövern werden solche Vorgänge zunächst einmal grob definiert. Geht man aber davon aus, dass eine Vielzahl von Strecken tatsächlich gefahren wird und hierbei Messwerte aufgenommen werden, die ein tatsächliches Geschwindigkeitsprofil wiedergeben, so wie von Fig. 2 erläutert, lassen sich die Geschwindigkeitsprofile immer besser in Vorgänge einteilen. Nach und nach stellt sich heraus, welche Vorgänge sich häufig wiederholen und welche eher selten sind. Es werden dann typische Vorgänge mit Mittelwerten definiert.

Nach Durchlaufen des Schrittes S16 wird in Schritt S18 das Geschwindigkeitsprofil energetisch betrachtet, also berechnet, wie viel Energie ein bestimmtes Fahrzeug beim Durchlaufen des Geschwindigkeitsprofils als Ergebnis von Schritt S16 benötigt. Die Schritte S10 bis S18 werden iterativ durchlaufen, damit eine Mehrzahl von Messwerten von tatsächlichen Geschwindigkeitsprofilen nach Art des zunächst angenommenen vorläufigen Geschwindigkeitsprofils 10 zur Verfügung steht. Man erhält letztlich in Schritt S20 eine Matrix, in der, wie in Fig. 3 zu sehen, mehrere Vorgänge ("Manöver") definiert sind. Hierbei erfolgt zunächst eine Unterscheidung nach der Art des Fahrertyps. Die Vorgänge lassen sich nämlich aufgrund bestimmter Eigenschaften dahingehend unterteilen, ob der Fahrer besonders aggressiv oder defensiv fährt oder einen mittleren Stil pflegt. Im Beispiel von Fig. 3 ist zwischen 8 Fahrertypen unterschieden.

Bei einem Fahrer "1" ist z. B. davon ausgegangen, dass bei einem ersten Manöver mit einer Geschwindigkeit von 47,79 km/h begonnen wird und mit einer Geschwindigkeit von 53,4 km/h geendet wird, die Dauer beträgt 9,1 Sekunden. Hierbei ist von einer bestimmten Steigung ausgegangen, über die die Beschleunigung erfolgte. Der Energieeintrag beträgt dann 1,43 kWh/km.

Bei einem Manöver "2" wird von 60,41 km/h auf 48,4 km/h verzögert. Die Dauer beträgt 11,1 Sekunden, es wird sogar Energie zurückgewonnen (z. B. durch Rekuperation). Auch hier ist von einer bestimmten Steigung ausgegangen.

Bei Manöver "2" ist davon ausgegangen, dass von einer Geschwindigkeitsbeschränkung auf 60 km/h ein Einfahren in eine Ortschaft erfolgt, bei der der Fahrzeugführer, der vorliegend defensiv sein mag, knapp unter 50 km/h fährt.

Bei Manöver 3 wird mit konstanter Geschwindigkeit von 52,66 km/h gefahren, dies entspricht einer typischen Geschwindigkeit innerorts, wenn sich der Fahrer an die Geschwindigkeitsbegrenzung halten möchte.

Bei Fahrer 8 erkennt man z. B. an Manöver "1", welches nicht unbedingt Manöver "1" von Beifahrer 1 entspricht, dass dieser relativ schnell beschleunigt und hierbei relativ viel Energie verbraucht.

Die Manöver entsprechen jeweils typischen Vorkommnissen bei bestimmten Fahrertypen. Die Anzahl der Manöver ist dergestalt, dass sich alle möglichen Fahrsituationen durch Zusammensetzung aus den einzelnen Manövern abbilden lassen.

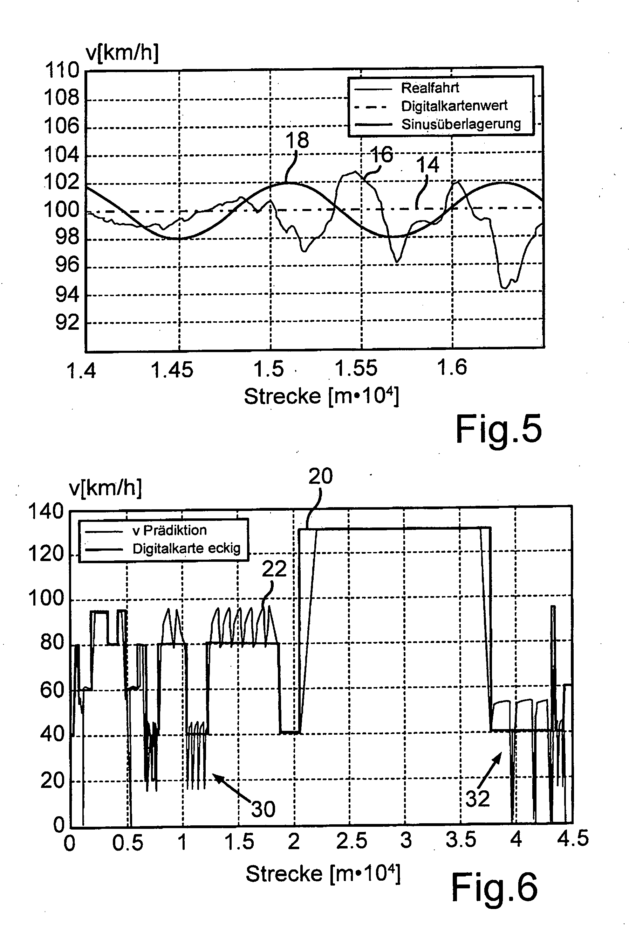

Wie dies bei Konstantfahrt erfolgt, wird nachfolgend anhand von Fig. 5 erläutert: Ein Fahrzeugführer möchte gemäß dem Graphen 14 fahren, also mit konstanter Geschwindigkeit von z. B. 100 km/h. Tatsächlich fährt er gemäß der Kurve 16, bleibt also zunächst etwas unterhalb der Geschwindigkeit, fährt dann etwas zu schnell, fährt dann wieder etwas langsamer (z. B. bei einer Kurvenfahrt), beschleunigt dann, nachdem er gemerkt hat, dass er schneller fahren kann etc. Dieses Schwanken in der Geschwindigkeit lässt sich dadurch simulieren, dass gemäß der Kurve 18 eine oszillatorische Geschwindigkeitsänderung der Konstantfahrt überlagert wird.

Zur Abbildung eines Stehenbleibens im Stadtverkehr lässt sich dies sogar soweit führen, dass die Amplitude der oszillatorischen Änderung bis auf den Wert von 0 km/h hinunterreicht. Genauso kann auch eine spontane Geschwindigkeitsänderung auf den Wert von 0km/h modelliert werden, an die sich dann wieder eine Fahrt mit endlicher Geschwindigkeit anschließt.

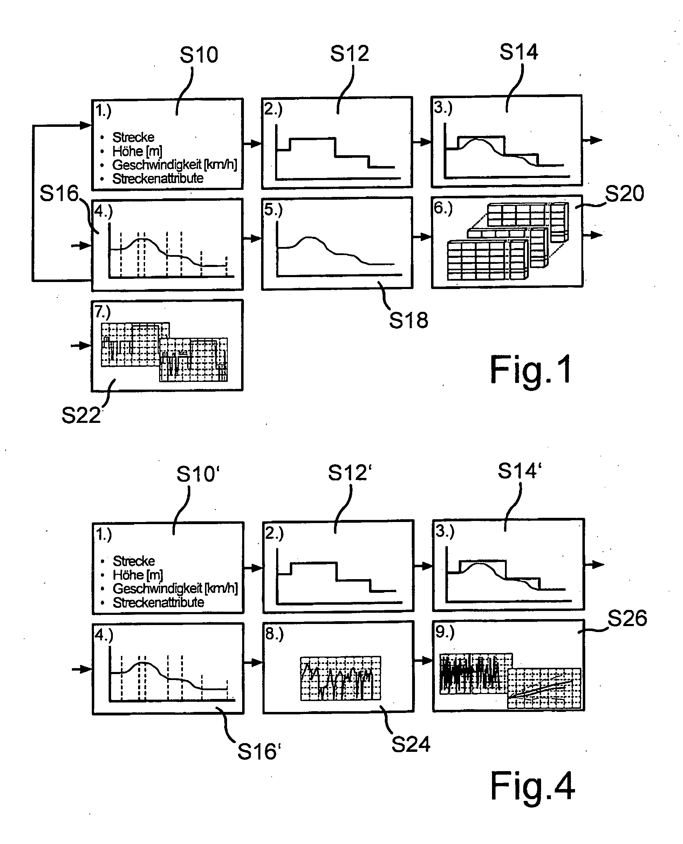

Das Verfahren wird zunächst iterativ gemäß den Schritten S10 bis S18 solange durchgeführt, bis die Matrix S20 in ausreichender Qualität zur Verfügung steht. In Fig. 1 ist hierbei gezeigt, dass die Iteration ausgehend von Schritt S18 wieder zu Schritt S10 zurückführt. Dies muss nicht exakt so verwirklicht sein, beispielsweise kann der Schritt S20 mit einer vorläufigen Matrix bereits durchlaufen werden, und es kann zum Schritt S12 zurückgekehrt werden. Das zu den Schritten S12 bis S18 anhand einer modellhaften Kurve Erläuterte wird hierbei für tatsächliche Geschwindigkeitsprofile durchgeführt.

Nachdem der Schritt S20 durchlaufen wurde, die Matrix also in ihrer endgültigen Form zur Verfügung steht, kann statistisch die Gesamtheit an bis dahin gewonnenen Datenwerten ausgewertet werden, siehe Schritt S22, um eine statistische Aussage über die Häufigkeit der einzelnen Manöver machen zu können. Diese Aussage kann später auch dazu genutzt werden, eine Auswahl betreffend der Manöver zu treffen, wenn diese verwendet werden sollen, oder um die Güte der Vorhersage anzugeben.

In Fig. 4 ist nun erläutert, was in einem einzelnen Fahrzeug im Rahmen des erfindungsgemäßen Verfahrens geschieht, wie es bei Gegebensein der Matrix als Datensatz durchgeführt werden kann: Auch hier wird wieder Schritt S10' durchgeführt, es stehen also entsprechende Daten dem Navigationssystem zur Verfügung. Hier ist nun davon ausgegangen, dass der Fahrer tatsächlich eine bestimmte Route auswählt, die er fahren möchte. (Diese Auswahl der Route kann auch durch das Navigationssystem vorgegeben sein, wenn der Fahrzeugführer ein bestimmtes Ziel angibt.) In Schritt S12' wird dann wieder die vorläufige Geschwindigkeitsverteilung angenommen, dann wird in Schritt S14' ein Modell mit einer Beschleunigung gemacht. In Schritt S16' erfolgt dann die Glättung des Geschwindigkeitsprofils. Hierbei wird diesmal nicht ein tatsächliches, gemessenes Geschwindigkeitsprofil verwendet, da ja ein Geschwindigkeitsprofil vorhergesagt werden soll. Schließlich wird das geglättete Geschwindigkeitsprofil in eine Mehrzahl von Teilabschnitten eingeteilt, denen jeweils ein Manöver zugeteilt ist. Es wird hierbei ein Manöver zugeordnet zu demjenigen Fahrertyp, der vorliegend vorhat, die Fahrstrecke zu fahren. Der Fahrer kann beispielsweise durch Knopfdruck selbst wählen, welchen Fahrstil er zu fahren vorhat, oder im Fahrzeug kann aufgrund vorheriger Erfahrungen auf den Fahrstil des Fahrers zurückgeschlossen werden.

In Schritt S24 erfolgt dann das Ermitteln des eigentlichen Geschwindigkeitsprofils inklusive einer Modulation.

Beispielsweise zeigt Fig. 6 das in Schritt S12' ermittelte Geschwindigkeitsprofil als Graph 20, und als Graph 22 ist dann gezeigt, welches Geschwindigkeitsprofil aus dem Schritt S24 hervorgeht: Hier ist insbesondere die oben anhand von Fig. 5 erläuterte Modulation im Bereich zwischen 12.500 m und 17.500 m berücksichtigt. Weitere Arten von Modulationen sind aus der Figur ersichtlich, beispielsweise wird für eine angenommene Konstantfahrt mit 40 km/h zwischen 11.000 m und 12.000 m (Bezugszahl 30) eine nichtoszillatorische Modulation angenommen. Es ist hier ein spezifisches Manöver definiert. Im Bereich zwischen 37.500 m und 43.000 m (Bezugszahl 32) gibt es abwechselnd Modulationen von 40 km/h nach oben als auch nach unten (Stillstandsphasen). Auch hier ist ein bestimmtes Manöver definiert. Es sei darauf hingewiesen, dass die beiden Manöver zwischen 11.000 m und 12.000 m einerseits und zwischen 37.500 m und 43.000 m andererseits beide ursprünglich auf einer Fahrt mit konstant 40 km/h beruhen, und dass jeweils andere Arten von Manövern und Geschwindigkeitsprofilen ausgewählt worden sind. Die Modulation von Stillstandsphasen in Häufigkeit und Zeitdauer ist insbesondere unterschiedlich. Grund hierfür ist, dass bei Festlegung des dem jeweiligen Manöver zugeordneten Geschwindigkeitsprofils zumindest das unmittelbar nachfolgende oder vorausgehende Manöver berücksichtigt wird. So erfolgt bei Bezugszahl 30 eine Fahrt mit durchschnittlich 40 km/h zwischen zwei Abschnitten mit durchschnittlich 80 km/h. Es kann sich um eine Fahrt auf der Landstraße handeln, wobei bei einer Verengung oder Baustelle die Geschwindigkeit auf 40 km/h zu reduzieren ist. Das festgelegte Geschwindigkeitsprofil ist ein solches, wie es dann üblicherweise an solchen Verengungsstellen auftritt. Hingegen folgt die Situation gemäß Bezugszahl 32 einer Fahrt auf der Autobahn, z.B. handelt es sich um das Fahren auf der Autobahnausfahrt mit durchschnittlich 40 km/h. Das festgelegte Geschwindigkeitsprofil ist dann naturgemäß von dem verschieden, wie es bei Bezugszahl 30 gezeigt ist. Durch die Beachtung des situativen Kontextes, also der im Zeitstrahl benachbarten Manöver, lässt sich somit bei der Modulierung differenziert arbeiten, so dass eine der Realität nähere Modellierung ermöglicht ist.

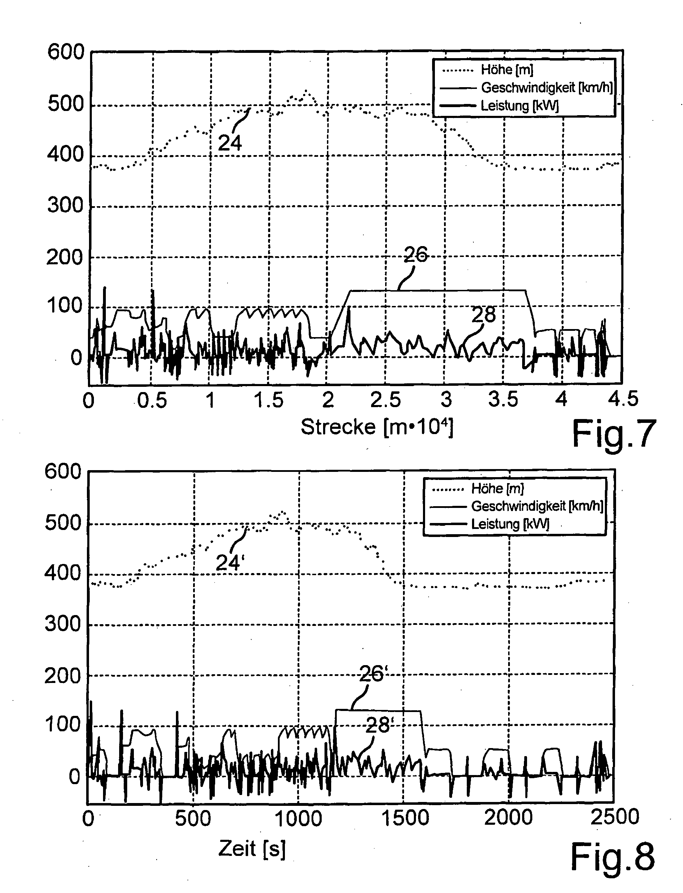

Schließlich kann in Schritt S26 noch abgeleitet werden, wie die von den einzelnen Rädern des Kraftfahrzeugs aufzubringende Leistung aussieht, und gleichzeitig kann eine Aussage über die Güte der Geschwindigkeitsprognose gemacht werden. Fig. 7 zeigt als Graphen 24 den Höhenverlauf, wie er sich beim Befahren einer bestimmten Route ergibt. Als Graphen 26 zeigt Fig. 7 den Geschwindigkeitsverlauf, der vorliegend dem aus Fig. 6 entspricht. Zu diesem Geschwindigkeitsverlauf ist nun auch die aufzubringende Leistung als Graph 28 angezeigt.

Fig. 8 zeigt dasselbe, nur in Abhängigkeit von der Zeit, mit den Graphen 24', 26' und 28'.

Durch die Erfindung, insbesondere durch das Konzept der "Vorgänge" bzw. Manöver aus einer entsprechenden Matrix (Fig. 3), die anhand von tatsächlichen Messungen abgeleitet werden, spiegelt sich in den schließlich ermittelten Geschwindigkeitsprofilen 26, 26' die Realität am Besten wieder, insbesondere die für einen bestimmten Fahrer geltende Realität. Dadurch werden insbesondere auch die Ankunftszeit und der Energieverbrauch besonders präzise (bzw. mit statistisch hoher Wahrscheinlichkeit präzise) ermittelbar: Somit ist ein Fortschritt in der Berechnung der Fahrtzeit und des Energieverbrauchs betreffend eine bestimmte Route gegeben.

## Patentansprüche

1. Verfahren zum Gewinnen eines Datensatzes, der die vorhergesagte Geschwindigkeit eines Fahrzeugs über eine Vielzahl von Streckenpunkten einer Route oder von Zeitpunkten beim Befahren der Route als Geschwindigkeitsprofil (26, 26') wiedergibt, mit den Schritten:
a) Bereitstellen eines ersten Datensatzes, durch den einer Vielzahl von Strecken Streckenpunkte zugeordnet sind,
b) Bereitstellen eines zweiten Datensatzes, durch den eine Mehrzahl von Vorgängen definiert ist, denen als definierende Größen zumindest eine Eingangsgeschwindigkeit und eine Ausgangsgeschwindigkeit zugeordnet sind, wobei zur Gewinnung des zweiten Datensatzes eine Mehrzahl von Routen befahren wird und hierbei zu Streckenpunkten Messwerte zur Geschwindigkeit gewonnen werden, und eine Mehrzahl von Fahrstilen definiert ist und in dem zweiten Datensatz zu jedem Fahrstil eine Mehrzahl von Vorgängen zugeordnet ist,
c) Auswahl einer vorbestimmten Route anhand des ersten Datensatzes,
d) Ermitteln eines vorläufigen Geschwindigkeitsprofils für die Fahrt eines Fahrzeugs über die vorbestimmte Route,
e) Aufteilen der Route in Streckenabschnitte, denen jeweils ein Vorgang aus den in dem zweiten Datensatz definierten Vorgängen zugeordnet wird, anhand des vorläufigen Geschwindigkeitsprofils, und
f) Festlegen eines Geschwindigkeitsprofils (26, 26') zu jedem in Schritt e) zugeordneten Vorgang, wobei das Festlegen zu einzelnen Vorgängen oder zu Vorgangsgruppen aus aufeinanderfolgenden Vorgängen erfolgt und bei zumindest einem bzw. einer der einzelnen Vorgänge oder Vorgangsgruppen hierbei berücksichtigt wird, welcher Vorgang oder welche Vorgangsgruppe vorausgeht oder nachfolgt, wobei vor Schritt e) entweder durch eine Bedieneingabe ein Fahrstil ausgewählt wird oder aufgrund einer Probefahrt ein Fahrstil zugeordnet wird, und wobei zumindest in Schritt e) der ausgewählte bzw. der zugeordnete Fahrstil berücksichtigt wird.

2. Verfahren nach Anspruch 1, bei dem bei zumindest-einem Teil der Vorgänge ein Geschwindigkeitsprofil zwischen der Eingangsgeschwindigkeit und der Ausgangsgeschwindigkeit festgelegt wird, das einen nicht-linearen Abschnitt umfasst.

3. Verfahren nach Anspruch 2, bei dem in dem nicht-linearen Abschnitt einem linearen Verlauf der Geschwindigkeit eine oszillatorische Änderung der Geschwindigkeit überlagert ist.

4. Verfahren nach Anspruch 2, bei dem ein Abschnitt mit linear verlaufender Geschwindigkeit von einem Abschnitt unterbrochen wird, bei dem spontan die Geschwindigkeit zu einer anderen Geschwindigkeit hin erhöht oder erniedrigt wird und vorzugsweise anschließend zum unterbrochenen linearen Verlauf zurückgekehrt wird.

5. Verfahren nach einem der vorhergehenden Ansprüche, bei dem auch in Schritt d) ein ausgewählter bzw. zugeordnete Fahrstil berücksichtigt wird.

6. Verfahren nach einem der vorhergehenden Ansprüche, bei dem der in Schritt a) bereitgestellte Datensatz auch eine Information über die Art von Straßen beinhaltet und diese in Schritt f) berücksichtigt wird.

7. Verfahren nach Anspruch 6, bei dem in Schritt f) berücksichtigt wird, welche Art von Straße bei dem bzw. der vorausgehenden oder nachfolgenden Vorgang bzw. Vorgangsgruppe befahren wird.

8. Verfahren nach einem der vorhergehenden Ansprüche, bei dem der in Schritt a) bereitgestellte Datensatz auch eine Information über die Höhe von Streckenpunkten beeinhaltet und diese in Schritt f) berücksichtigt wird.

9. Verfahren nach Anspruch 6, bei dem in Schritt f) berücksichtigt wird, welche Eingangshöhe und/oder Ausgangshöhe bei dem bzw. der vorausgehenden oder nachfolgenden Vorgang bzw. Vorgangsgruppe erreicht wird.

10. Verfahren nach einem der vorhergehenden Ansprüche, bei dem anhand des Geschwindigkeitsprofils (26, 26') die an den Rädern eines die Route befahrenen Fahrzeugs aufzubringende Leistung (28, 28') über die Streckenpunkte oder Zeitpunkte ermittelt wird.

11. Verfahren nach einem der vorhergehenden Ansprüche, bei dem der erste und der zweite Datensatz in einem Speicher eines Kraftfahrzeugs abgelegt werden, Schritt c) anhand einer Bedienvorrichtung in dem Kraftfahrzeug erfolgt und die Schritte d) bis f) durch eine Datenverarbeitungseinrichtung des Kraftfahrzeugs durchgeführt werden.

## Claims

1. Method for obtaining a data set, which represents the predicted speed of a vehicle as a velocity profile (26, 26') through a plurality of route points on a route, or time points when travelling on the route, comprising the steps of:
a) providing a first data set through which with a variety of route points are assigned,
b) providing a second data set through which a plurality of processes is defined, and which are assigned as defining magnitudes, of at least an input speed and an output speed, wherein a plurality of routes is travelled in order to obtain the second data set, and, in this case, measured values for the speed are obtained at the route points, and a plurality of driving styles is defined, while in the second data set each driving style is assigned a plurality of processes,
c) selecting a predetermined route on the basis of the first data set,
d) determining a provisional speed profile for the journey of a vehicle on the predetermined route,
e) dividing the route into route sections, each of which is assigned a process from the processes defined in the second data set, using the provisional speed profile, and
f) determining a speed profile (26, 26') for each process assigned in step e), wherein the determination of individual processes or process groups of successive processes is carried out, and, in this case, which process or process group precedes or follows is taken into account in at least one of the individual processes or one of the process groups, wherein prior to step e) either a driving style is selected by an operator input or a driving style is assigned following a test drive, and wherein the selected or assigned driving style is considered at least in step e).

2. Method according to claim 1, wherein a velocity profile between the input speed and the output speed is determined in at least a part of the process, and which comprises a non-linear section.

3. Method according to claim 2, wherein an oscillatory change in velocity is superimposed in the non-linear section of a linear progression of the speed.

4. Method according to claim 2, wherein a section with the linear progression of the speed is interrupted by a section in which the spontaneous speed is increased or decreased to a different speed, and is then preferably returned to the interrupted linear progression.

5. Method according to any one of the preceding claims, wherein a selected or assigned driving style is considered in step d).

6. Method according to one of the preceding claims, wherein the data set provided in step a) also contains information about the type of roads and this is taken into account in step f).

7. Method according to claim 6, wherein what kind of road is travelled in the preceding or following process or process group is considered in step f).

8. Method according to any one of the preceding claims, wherein the data set provided in step a) also includes information on the amount of these route points and this is taken into account in step f).

9. Method according to claim 6, wherein what input amount and/or output amount achieved in the preceding or following process or process group is considered in step f).

10. Method according to any one of the preceding claims, wherein the power (28, 28') to be applied to the wheels of a vehicle travelling the route is determined on the basis of the velocity profile (26, 26) via the route points or points in time.

11. Method according to any one of the preceding claims, wherein the first and the second data set are stored in a memory of a motor vehicle, step c) is carried in the vehicle by means of a control device, and steps d) to f) are carried out by a data processing device of the motor vehicle.

## Revendications

1. Procédé d'obtention d'un ensemble de données qui reproduit la vitesse prévue d'un véhicule sur une pluralité de points de parcours d'un itinéraire ou une pluralité d'instants au cours du parcours de l'itinéraire comme profil de vitesse (26, 26'), avec les étapes :
a) préparation d'un premier ensemble de données par lequel des points de parcours sont associés à une pluralité de parcours,
b) préparation d'un deuxième ensemble de données par lequel sont définies une pluralité d'opérations auxquelles au moins une vitesse d'entrée et une vitesse de sortie sont associées comme grandeurs définissantes, une multiplicité d'itinéraires étant parcourus pour l'obtention du deuxième ensemble de données et, ce faisant, des valeurs mesurées pour la vitesse étant obtenues au niveau de points de parcours, et une multiplicité de styles de conduite étant définis et une multiplicité d'opérations étant associées à chaque style de conduite dans le deuxième ensemble de données,
c) sélection d'un itinéraire prédéterminé à l'aide du premier ensemble de données,
d) détermination d'un profil de vitesse provisoire pour la circulation d'un véhicule sur l'itinéraire prédéterminé,
e) division de l'itinéraire en tronçons de parcours, auxquels est associée à chaque fois une opération parmi les opérations définies dans le deuxième ensemble de données, à l'aide du profil de vitesse provisoire, et
f) spécification d'un profil de vitesse (26, 26') au niveau de chaque opération associée dans l'étape e), la spécification au niveau d'opérations individuelles ou de groupes d'opérations s'effectuant à partir d'opérations successives et ce faisant, pour au moins l'une des opérations individuelles ou l'un des groupes d'opérations, l'opération ou le groupe d'opérations qui précède ou qui suit étant pris en compte, soit un style de conduite étant sélectionné par une entrée de commande soit un style de conduite étant associé sur la base d'un parcours d'essai avant l'étape e), et le style de conduite sélectionné ou le style de conduite associé étant pris en compte au moins dans l'étape e).

2. Procédé selon la revendication 1, selon lequel, pour au moins une partie des opérations, on spécifie un profil de vitesse qui est compris entre la vitesse d'entrée et la vitesse de sortie et qui comprend un tronçon non linéaire.

3. Procédé selon la revendication 2, selon lequel, dans le tronçon non linéaire, une variation oscillatoire de la vitesse est superposée à une allure linéaire de la vitesse.

4. Procédé selon la revendication 2, selon lequel un tronçon ayant une vitesse d'allure linéaire est interrompu par un tronçon pour lequel on augmente ou réduit la vitesse spontanément à une autre vitesse puis on revient de préférence à l'allure linéaire interrompue.

5. Procédé selon l'une des revendications précédentes, selon lequel on prend aussi en compte dans l'étape d) un style de conduite sélectionné ou associé.

6. Procédé selon l'une des revendications précédentes, selon lequel l'ensemble de données préparé dans l'étape a) contient aussi une information sur le type de routes et selon lequel cette information est prise en compte dans l'étape f).

7. Procédé selon la revendication 6, selon lequel on tient compte dans l'étape f) du type de route qui a été parcourue lors de l'opération ou du groupe d'opérations qui précèdent ou qui suivent.

8. Procédé selon l'une des revendications précédentes, selon lequel l'ensemble de données préparé dans l'étape a) contient aussi une information sur l'altitude de points de parcours et selon lequel cette information est prise en compte dans l'étape f).

9. Procédé selon la revendication 6, selon lequel on tient compte dans l'étape f) de l'altitude d'entrée et/ou de l'altitude de sortie qui a été atteinte lors de l'opération ou du groupe d'opérations qui précèdent ou qui suivent.

10. Procédé selon l'une des revendications précédentes, selon lequel, à l'aide du profil de vitesse (26, 26'), on détermine la puissance (28, 28'), à appliquer aux roues d'un véhicule parcourant l'itinéraire, au niveau des points de parcours ou des instants.

11. Procédé selon l'une des revendications précédentes, selon lequel on enregistre dans une mémoire d'un véhicule automobile le premier ensemble de données et le deuxième ensemble de données, on met en oeuvre l'étape c) à l'aide d'un dispositif de commande dans le véhicule automobile et on met en oeuvre les étapes d) à f) au moyen d'un dispositif de traitement de données du véhicule automobile.
